# EUROPÄISCHE PATENTSCHRIFT

(11) **EP 0 999 638 B1**
(45) Veröffentlichungstag und Bekanntmachung des Hinweises auf die Patenterteilung: **10.04.2002**
(21) Anmeldenummer: 98120831.7
(22) Anmeldetag: 03.11.1998
(51) Int. Cl.: H02K 15/12, H02K 15/00

(54) **Verfahren zur künstlichen thermischen und mechanischen Alterung von Rotoren elektrischer Maschinen**
Method for artifically performing thermal and mechanical ageing of rotors for electrical machines
Procédé de vielissement thermique et méchanique artificiel de rotors de machines électriques

(43) Veröffentlichungstag der Anmeldung: 10.05.2000
(73) Patentinhaber: Berghänel Elektrotechnik, 09119 Chemnitz (DE)
(72) Erfinder: Berghänel, Dietmar Dipl.-Ing., 09119 Chemnitz (DE)
(74) Vertreter: Seerig & Hübner

(56) Entgegenhaltungen:
- DE-A- 2 135 579
- US-A- 4 942 322
- PATENT ABSTRACTS OF JAPAN vol. 010, no. 042 (E-382), 19. Februar 1986 & JP 60 197139 A (TOSHIBA CHEMICAL KK), 5. Oktober 1985

## Beschreibung

Die Erfindung betrifft ein Verfahren zur künstlichen thermischen und mechanischen Alterung von Rotoren elektrischer Maschinen, die in hohen Stückzahlen gefertigt und vorzugsweise in elektrischen Hausgeräten, Elektrowerkzeugen und als Hilfsantriebe in Kraftfahrzeugen eingesetzt werden.

Es ist bekannt, mechanische Spannungen im Rotor durch mechanische Beanspruchung, z.B. durch Klopfen oder Rollen, zu beseitigen. Nachteilig an diesem Verfahren ist, daß es unter den Bedingungen der Fertigung unvorteilhaft anzuwenden ist und mechanische sowie elektrische Beschädigungen auftreten können. Außerdem fehlt bei diesem Verfahren die thermische Alterung.

Es ist auch bekannt, die Rotoren in einer Klimaanlage zu tempern. Die Nachteile dieses Verfahrens bestehen darin, daß seine Anwendung am Fließband wegen des großen Zeitaufwandes unmöglich ist und die mechanische Alterung durch Klopfen oder Rollen fehlt. Es wären zusätzliche Arbeitsgänge erforderlich, wodurch der materielle oder zeitliche Aufwand weiter vergrößert würde.

Weiterhin ist bekannt (JP 60-197 139 A) zum Aushärten der eingeträufelten Harze die Wirbelströme auszunutzen. Damit die in den Ankerspulen induzierten Hochspannungen zu keiner Korona-Entladung führen, wird der Kommutator kurzgeschlossen. Es werden auf diese Weise Spannungsdurchschläge zwischen den Wicklungen vermieden. Das Verfahren wird im Frequenzbereich von ca. 20 kHz angewendet und hat ausschließlich die Induktionserwärmung des Rotoreisens zum Inhalt.

Mechanisches Biegen (Formen) der Ständerwicklung sehr großer Maschinen unter Anwendung starker magnetischer Felder auf elektrodynamischem Weg ist in DE-OS 18 05 490 beschrieben. Es wird lediglich der manuelle Arbeitsgang des Umbiegens vereinfacht.

Auch das in DE-AS 16 13 209 beschriebene Verfahren hat ausschließlich das Füllen von Zwischenräumen zwischen den Statorwicklungen mittels thermoplastischer Isoliermasse bei gleichzeitigem mechanischem Verformen backlackisolierter Wickeldrähte unter Einfluß von Wärme zum Inhalt. Wärme und Druck dienen dem Ziel, eine weitgehend hohlraumfreie Ständerwicklungsisolation herzustellen.

FR 21 12 604 gibt lediglich Parameter (Zeit und Frequenz) für die Erzeugung der "Imprägnierwärme" an. Die Anwendung dieser Verfahren hat mit einer Rotorbehandlung im erfindungsgemäßen Sinne nichts zu tun.

Aufgabe der Erfindung ist ein Verfahren zur künstlichen thermischen und mechanischen Alterung von Rotoren elektrischer Maschinen, um die bei der Montage der Rotorbleche und Kommutatoren sowie dem Wickeln der Rotorspulen entstandenen mechanischen Spannungen und Verformungen durch eine fertigungsfreundliche thermische und mechanische Alterung so weit abzubauen, daß die nach dem anschließenden Auswuchten erreichten dynamischen Parameter dauerhaft stabil bleiben.

Erfindungsgemäß wird die Aufgabe durch die Merkmale des Hauptanspruchs gelöst. Ausgestaltungen der Erfindung sind in den Unteransprüchen dargestellt.

Der Vorteil der Erfindung besteht darin, daß die thermische Alterung und die mechanische Alterung des Rotors gleichzeitig erfolgen. Durch eine schnelle Erwärmung des Rotors von innen heraus bei gleichzeitiger mechanischer Beanspruchung des Rotors durch ein elektromagnetisches Wechselfeld lassen sich die bei der Fertigung entstandenen mechanischen Spannungen und Verformungen in sehr kurzer Zeit beseitigen. Die für die künstliche thermische und mechanische Alterung von Rotoren elektrischer Maschinen aufzuwendende Zeit ist so kurz, daß dieser Arbeitsgang im Fertigungsablauf am Band möglich ist. Vorteilhaft ist auch, daß das sofort anschließende Auswuchten des warmen Rotors durch Fräsen eine weitere künstliche mechanische Alterung bewirkt.

Die Erfindung wird nachfolgend anhand eines Ausführungsbeispieles näher erläutert.

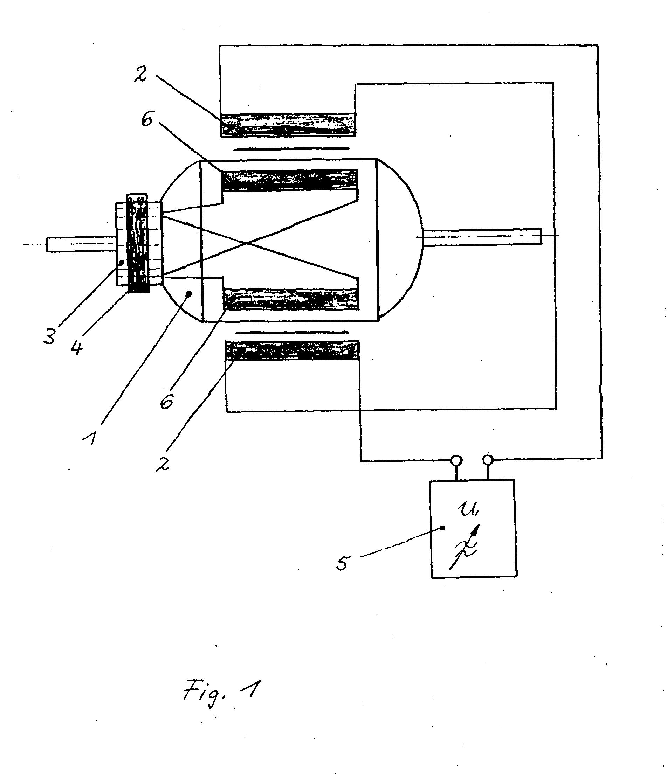

Die dazugehörige Zeichnung zeigt in
- Fig. 1:: den am Kommutator kurzgeschlossenen Rotor in einem elektromagnetischen Wechselfeld.

Spulen 2 werden von einer Spannungsquelle 5 mit veränderlicher Frequenz gespeist, erzeugen ein primäres elektrisches Wechselfeld und entsprechen der Primärwicklung eines Transformators. Die Enden der Rotorspulen 6 im Rotor 1 sind über einen Kurzschlußring 4 am Stromabnehmer 3 miteinander verbunden. Dadurch verhalten sich die Rotorspulen 6 wie kurzgeschlossene Sekundärspulen eines Transformators.

Der in den Rotorspulen 6 fließende Kurzschlußstrom führt zu einer sehr schnellen Erwärmung des Rotors 1 von innen heraus. Die Frequenz der Spannungsquelle 5 wird so gewählt, daß der Rotor 1 in mechanische Schwingungen versetzt wird. Die thermische Belastung und die mechanische Belastung des Rotors 1 führen zu einer dauerhaften Formierung, so daß durch Vorwegnahme der Alterung des Rotors 1 nach dem Auswuchten keine Veränderungen durch Alterung auftreten können.

Die Formierung kann bei einer oder mehreren Frequenzen bzw. nach dem Wobbel-Prinzip mit durchlaufender Frequenz erfolgen. Dabei liegen die Frequenzen vorzugsweise zwischen 15 Hz und 1 kHz. Die sinusförmige Spannungsquelle 5 kann auch durch einen Impulsgeber ersetzt werden, der Impulse mit veränderlicher Impulshöhe, Impulsdauer und Impulsfrequenz abgibt. Die Spulen 2 können auch ein Drehstromfeld oder eine Drehstromanordnung und/oder die Spannungsquelle 5 eine Mehrphasenspannungsquelle mit veränderbarer Frequenz sein. Die Stromabnehmer 3 können z.B. Kommutatoren bei Rotoren für Universalmaschinen und Schleifringe bei Klauenpolankern sein.

Durch Drehen des Rotors 1 beim Formieren kann der Alterungsprozeß unterstützt werden.

Es ist vorteilhaft, sofort nach der Formierung den warmen Rotor durch Fräsen oder eine ähnliche Bearbeitung auszuwuchten.

Erfolgt die künstliche thermische und mechanische Alterung vor dem Überdrehen des Kommutators, so wird auch die durch die Drehbearbeitung erreichte Kommutatorgeometrie stabil.

Das beschriebene Verfahren zur künstlichen thermischen und mechanischen Alterung von Rotoren elektrischer Maschinen ist mit anderen bekannten Verfahren kombinierbar.

## Patentansprüche

1. Verfahren zur künstlichen thermischen und mechanischen Alterung von Rotoren elektrischer Maschinen, bei dem der Rotor (1) an seinem Stromabnehmer (3) kurzgeschlossen und einem elektromagnetischen Wechselfeld ausgesetzt ist, so daß der in den Rotorspulen (6) induzierte Kurzschlußstrom gleichzeitig im Rotor (1) zur mechanischen Alterung geeignete Resonanzschwingungen anregt und den Rotor (1) zur thermischen Alterung erwärmt.

2. Verfahren nach Anspruch 1, **dadurch gekennzeichnet, daß** die am Rotor (1) anliegende Frequenz fest eingestellt oder veränderlich ist.

3. Verfahren nach Anspruch 1 oder 2, **dadurch gekennzeichnet, daß** sich der Rotor (1) während der Alterung dreht.

4. Verfahren nach Anspruch 1, 2 oder 3, **dadurch gekennzeichnet, daß** die Alterung des Rotors (1) vor dem Überdrehen des Kommutators erfolgt.

5. Verfahren nach einem der Ansprüche 1 bis 4, **dadurch gekennzeichnet, daß** die Alterung des Rotors (1) vor dem Auswuchten erfolgt.

6. Verfahren nach einem der Ansprüche 1 bis 5, **dadurch gekennzeichnet, daß** der noch warme Rotor (1) sofort durch Fräsen gewuchtet und dadurch eine weitere Stabilisierung erreicht wird.

7. Verfahren nach einem der Ansprüche 1 bis 6, **dadurch gekennzeichnet, daß** die Frequenz des sinusförmigen elektromagnetischen Feldes zwischen 15 Hz und 1 kHz liegt.

8. Verfahren nach einem der Ansprüche 1 bis 6, **dadurch gekennzeichnet, daß** der Rotor (1) Impulsen mit veränderlicher Impulshöhe, Impulsdauer und Impulsfrequenz ausgesetzt wird.

9. Verfahren nach einem der Ansprüche 1 bis 8, **dadurch gekennzeichnet, daß** das Verfahren mit anderen bekannten Verfahren zur Formierung von Rotoren (1) kombiniert wird.

10. Verfahren nach einem der Ansprüche 1 bis 9, **dadurch gekennzeichnet, daß** die Spannungsquelle (5) eine Mehrphasen-Spannungsquelle mit veränderlicher Frequenz und die Spulen (2) eine Drehstromanordnung sind.

11. Verfahren nach einem der Ansprüche 1 bis 10, **dadurch gekennzeichnet, daß** der Stromabnehmer (3) mit einem Kurzschlußring (4) kurzgeschlossen wird.

## Claims

1. Method for artificial thermal and mechanical ageing of rotors for electrical machines, in which the rotor (1) is short-circuited at its current collector (3) and is subjected to an electromagnetic alternating field, so that the short-circuit current induced in the rotor coils (6) at the same time stimulates suitable resonant oscillations in the rotor (1) for mechanical ageing, and heats the rotor (1) for thermal ageing.

2. Method according to Claim 1, **characterized in that** the frequency applied to the rotor (1) is set at a fixed value or is variable.

3. Method according to Claim 1 or 2, **characterized in that** the rotor (1) is rotated during the ageing process.

4. Method according to Claim 1, 2 or 3, **characterized in that** the rotor (1) is aged before the commutator is skimmed.

5. Method according to one of Claims 1 to 4, **characterized in that** the rotor (1) is aged before the balancing process.

6. Method according to one of Claims 1 to 5, **characterized in that**, while the rotor (1) is still warm, it is immediately balanced by milling, thus achieving further stabilization.

7. Method according to one of Claims 1 to 6, **characterized in that** the frequency of the sinusoidal electromagnetic field is between 15 Hz and 1 kHz.

8. Method according to one of Claims 1 to 6, **characterized in that** the rotor (1) is subjected to pulses with a variable pulse magnitude, pulse duration and pulse repetition frequency.

9. Method according to one of Claims 1 to 8, **characterized in that** the method is combined with other known methods for forming rotors (1).

10. Method according to one of Claims 1 to 9, **characterized in that** the voltage source (5) is a variable-frequency polyphase voltage source, and the coils (2) are a three-phase arrangement.

11. Method according to one of Claims 1 to 10, **characterized in that** the current collector (3) is short-circuited by means of a short-circuiting ring (4).

## Revendications

1. Procédé pour le vieillissement thermique et mécanique artificiel de rotors de machines électriques, dans lequel le rotor (1) est court-circuité à son collecteur de courant (3) et est exposé à un champ électromagnétique alternatif, de telle manière que le courant de court-circuit induit dans les spires du rotor (6) provoque simultanément des vibrations de résonance appropriées dans le rotor (1) pour son vieillissement mécanique et un échauffement du rotor (1) pour son vieillissement thermique.

2. Procédé suivant la revendication 1, **caractérisé en ce que** la fréquence appliquée au rotor (1) est fixe ou variable.

3. Procédé suivant la revendication 1 ou 2, **caractérisé en ce que** le rotor (1) tourne pendant le vieillissement.

4. Procédé suivant la revendication 1, 2 ou 3, **caractérisé en ce que** le vieillissement du rotor (1) a lieu avant la marche à survitesse du collecteur.

5. Procédé suivant l'une quelconque des revendications 1 à 4, **caractérisé en ce que** le vieillissement du rotor (1) a lieu avant l'équilibrage.

6. Procédé suivant l'une quelconque des revendications 1 à 5, **caractérisé en ce que** le rotor (1) encore chaud est équilibré immédiatement par fraisage et **en ce que** l'on obtient ainsi une stabilisation supplémentaire.

7. Procédé suivant l'une quelconque des revendications 1 à 6, **caractérisé en ce que** la fréquence du champ électromagnétique sinusoïdal se situe entre 15 Hz et 1 kHz.

8. Procédé suivant l'une quelconque des revendications 1 à 6, **caractérisé en ce que** le rotor (1) est exposé à des impulsions ayant une amplitude d'impulsion, une durée d'impulsion et une fréquence d'impulsion variables.

9. Procédé suivant l'une quelconque des revendications 1 à 8, **caractérisé en ce que** le procédé est combiné avec d'autres procédés de formage de rotors (1).

10. Procédé suivant l'une quelconque des revendications 1 à 9, **caractérisé en ce que** la source de courant (5) est une source de courant polyphasée à fréquence variable et les spires (2) une disposition de courant triphasé.

11. Procédé suivant l'une quelconque des revendications 1 à 10, **caractérisé en ce que** le collecteur de courant (3) est court-circuité avec une bague de court-circuit (4).
